# EUROPEAN PATENT APPLICATION

(11) **EP 0 646 817 A2**
(43) Date of publication of application: **05.04.1995**
(21) Application number: 94113125.2
(22) Date of filing: 23.08.1994
(51) Int. Cl.: G02B 6/00, G02B 6/44, H02G 15/14, H02G 15/10

(54) **Composite cable joint**

(30) Priority: 30.09.1993 NO 933493
(71) Applicant: ALCATEL KABEL NORGE AS, N-0510 Oslo (NO)
(72) Inventor: Knudsen, Anton Marius, N-1555 Son (NO); Friis, Brigt Lokke, N-0580 Oslo (NO)
(74) Representative: Pohl, Herbert, Dipl.-Ing

(57) **Abstract**

The present invention relates to means for jointing a bundle of longitudinal elements, such as a composite electrical/fiber optic cable. A fiber optic jointing cabinet (21,58) is fitted to a cradle-like structure (20,59) encompassing a bundle (27,50) of the remaining longitudinal elements. An outer housing (23,24) encompassing the cabinet/cradle (21,20;58,59) structure has threaded areas for providing controlled tensioning of armour wires.

## Description

The present invention relates to means for jointing a bundle of longitudinal elements and in particular to means for jointing a composite electrical/optical cable. Such composite electrical/optical cables may have three or more insulated power conductors and one or more fiber optic cables and other longitudinal elements arranged within a common armouring. If one of the elements in a bundle is damaged, it may be necessary to cut the bundle and make a controlled joint of all elements, in order to obtain equal tension in all elements and the protecting armour. If the optical part of a composite cable is damaged, a repair will most probably also require jointing of the power part of the cable.

Composite cables of the type concerned are frequently used in offshore installations and the jointing procedures must be as simple as possible to make reliable joints. Jointing procedures for damaged submarine cables usually require cutting of the cable at the sea bottom, while making sure that sea water does not penetrate into the cut cable ends, - bringing a first cut end to the surface, - jointing this first cut end to one end of a short length of a fresh cable, - bringing the second cut end to the surface, - jointing this second cut end to the other end of the fresh cable length, - and finally lowering the jointed cable to the sea bottom.

It should be well understood that handling of the two joints, and the bight between the two joints, on a cable ship, can be a rather difficult task, - in particular in rough weather and high sea. The object of the present invention is to provide improved means for jointing a bundle of longitudinal elements such as a composite cable of the type described.

The features of the invention are defined in the accompanying claims. A bundle of longitudinal elements such as a composite cable of the type described can be efficiently jointed with a minimum amount of time. One advantage of the invention is also that tensioning of the armour wires are simplified and improved. The part of the composite joint comprising the jointing cabinet for the fiber optic cable is short and will easily pass over the bow wheel of a cable ship.

Above mentioned and other features and objects of the present invention will clearly appear from the following detailed description of embodiments of the invention taken in conjunction with the drawings, where
Figure 1 illustrates a length of a composite cable,
Figure 2 shows a crossection of a cable,
Figure 3 shows a crossection of a fiber optic joint area,
Figure 4 shows a partial cut through a side view of the fiber optic joint area,
Figure 5 shows a more detailed crossection through the optical fiber optic joint of Figures 3 and 4, and
Figure 6 shows a crossection through an alternative joint.

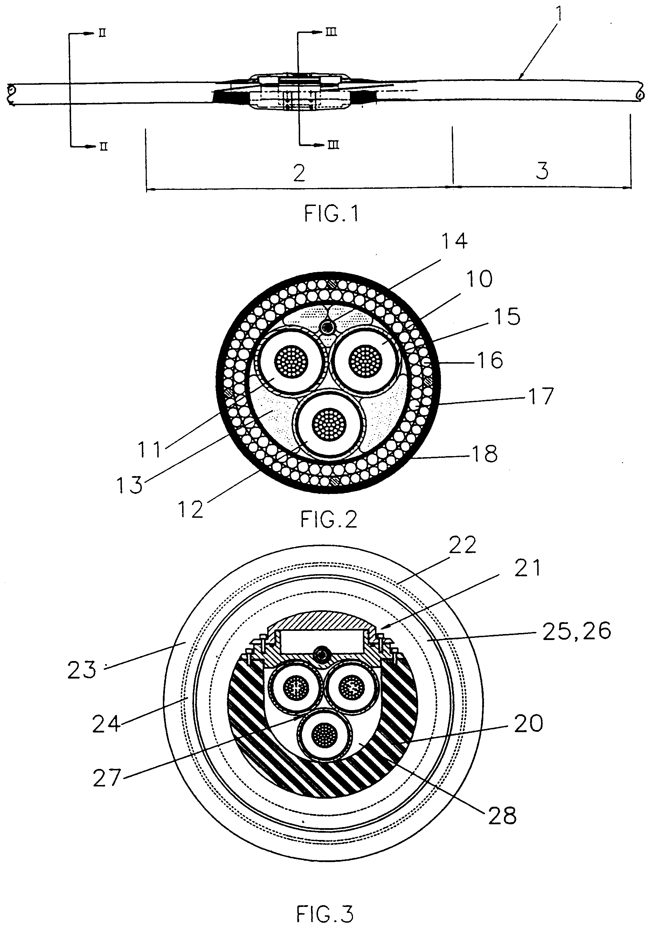

In Figure 1 is indicated a bundle 1 of longitudinal elements such as a composite cable, the crossection of which is shown in Figure 2. The composite electrical/optical cable has three insulated power conductors arranged in a triangle with a fiber optic cable placed in a space between two of the power conductors (or phases). Figure 1 indicates a optical fiber optic joint area 2 and a power conductor joint area 3.

The joint area 3 is conventional and will not be described in this case. The power conductors are usually of the multi-wire type which is jointed wire by wire to provide a fully flexible joint. After jointing the conductor, the insulation is re-established, and the joints of the three conductors are usually displaced from each other along the length of the cable. The power conductor joint is shown displaced from the fiber joint area, but this need not be so. A jointed power conductor represents very little, if any, increase of the overall conductor diameter, and there could be overlap of the two jointing areas 2 and 3. When jointing such a composite cable, time can probably be saved by jointing the two parts of the cable simultaneously. The normal situation is, however, to complete the power bundle joint before jointing the fiber optic cable and finally replacing the armour.

Figure 2 shows as mentioned a crossection of the cable 1 taken along the line II-II in Figure 1. The composite cable shown has three insulated power conductors 10, 11 and 12, each consisting of a conductor, an inner semiconducting sheath, layers of polymer insulation, an outer semiconducting layer and an impervious layer such as a lead sheath. The details of the insulated power conductors are not shown in detail. The three outer spaces between the conductors are usually filled with a filling material 13 such as polypropylene yarn, and in the case of the composite electrical/optical cable, the optical cable 14 is placed in one of the spaces as indicated. The power conductors are stranded along the length of the cable and so is the fiber optic cable to form a stranded bundle, also in the following called the original bundle. The cable core is provided with a surrounding sheath 15 as well as one or more armouring layers 16 and 17 and outer corrosion protection 18.

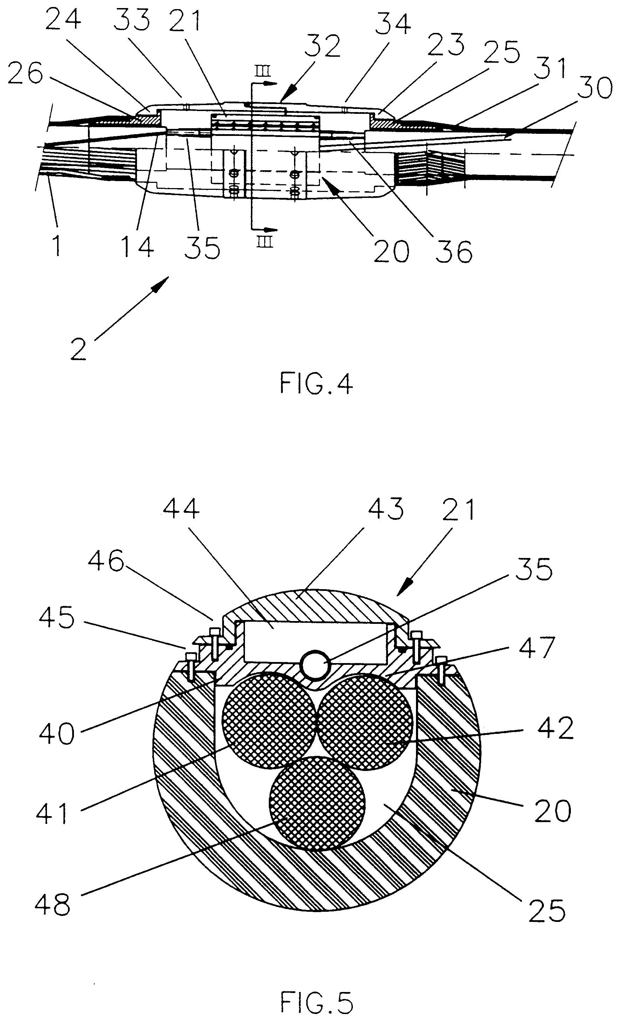

Figure 3 illustrates a crossection of the fiber optic joint area 2 in Figure 1 taken along the line III-III. This figure is also a crossection of Figure 4, whereas Figure 5 shows the jointing means in greater detail. The power cable conductors are arranged in a cradle-like structure 20 and the fiber optic cable is inserted into a fiber optic jointing cabinet 21 attached to the cradle 20. The interior details of the cabinet are not shown. The double circle 22 indicates the inner surface of an outer housing. The housing itself consists of two parts 23 and 24 which are threaded together, and two parts 25 and 26 (shown in Figure 4) which are rotatably connected to the parts 23 and 24 respectively. The diametrical dimensions are not shown to scale and the voids between the cradle/cabinet structure and the inner surface of the housing can be much smaller.

In Figures 3 and 5 the longitudinal element or fiber optic cable 14 has been lifted out of the original bundle consisting of the elements 10, 11, 12 and 14 to be jointed in the cabinet 21. The remaining elements of the bundle, which in the following will be called a remaining bundle 27, consisting of the three insulated power conductors, is prevented from rotating relatively to the cabinet/cradle structure due to the low position of the cabinet. If the space between the remaining bundle and the bottom of the cabinet is larger, means should be provided for preventing or limiting rotation of said remaining bundle 27 relatively to the cabinet/cradle structure 21,20. The rotation preventing/limiting means can be constituted by a compound 28 substantially filling all voids within the cabinet/cradle structure 21,20. Such compound, which substitutes the fillers 13, can be a silicone rubber which also prevents water from penetrating the joint. Means (not shown) should be provided at the ends of the joint area 2, within the bundle/cable, to prevent the filling material 28 from penetrating into the cable voids on either side of the joint area 2.

In Figure 4 is illustrated a fiber optic jointing area 2 seen from the side. The upper part of the drawing represents a partial cut through the joint. The power conductors indicated at 30 pass through the joint area in a stranded manner. The armour 31, in this case a double armour which prevents twisting of the cable core of the composite cable 1, is secured (welded/soldered) to a cylindrical steel part or flange 25, whereas the armour from the other side is secured to a corresponding steel part or flange 26. The armour from at least one of the sides may be pretwisted sets of armour wires replacing the original cable armour wires. Such pretwisted sets of armour (not shown) are usually arranged in the power joint area 3. It is essential that all armour wires terminated on the flanges 25 and 26 have the same tension.

The two parts 25 and 26 are provided with flanges corresponding with flanges of two threaded parts 23 and 24, so that when the part 23 is threaded onto the part 24, in order to give all the armour wires a defined and equal tension, the flanges slide on each other. The threaded area is indicated at 32. The principle of tensioning two sets of armour with a threaded flange arrangement similar to the assembly 23-26 may be used also on other types of joints.

The entrance for the cable core through the parts 25 and 26 must be well rounded and smooth in order to protect the outer surface of the insulated power conductors. These longitudinal elements may also have outer protection such as heat shrinkable sleeves.

The fiber optic cable 14 is indicated entering the cabinet 21 through entrances 35 and 36, and the strength elements of the fiber optic cable ends are anchored within the cabinet so as to leave the fibers completely free of any strain.

The housing parts 23 and 24 can be provided with through-holes 33 and 34 with the combined purpose of enabling use of tools (not shown) for rotating said parts on their threads, and for enabling filling of the voids provided by the parts 23 and 24 as well as the cradle structure 20-21 with a filling compound such as a silicone rubber.

In Figure 5 the fiber optic jointing means of Figures 3 and 4 are shown in greater detail. The fiber optic jointing cabinet 21 is as shown provided with a bottom part 40 fitted to the curvature of two elements 41 and 42 of the remaining bundle which in this example is constituted by three insulated power conductors 41, 42 and 48. A lid 43 is shown having a curvature corresponding to that of the cradle 20. The outer surface of the cabinet 21 with the cradle 20 is substantially circular. The cabinet 21 may be made of sea water resistant material such as stainless steel and the cradle 20 may be made of a polyamide such as nylon. The bottom and lid parts of the cabinet 21 provide a closed jointing compartment 44 for the fibers (not shown) where jointing can be undertaken free of any strain on the optical fibers. One entrance to the cabinet is indicated at 35. The bottom part 40 of the cabinet is fixed to the cradle 20 by means of bolts 45 and the cabinet parts 40 and 43 are assembled after jointing of the fiber optic cable, by means of bolts 46. The jointing compartment 44 within the cabinet is filled with a water repellent compound compatible with the fiber optic cable, through filling holes not shown. Normally the cabinet will be filled before fitting the lid, possibly followed by after-filling through filling holes.

As mentioned and indicated in connection with Figure 4, the power conductors are stranded with a certain pitch. When the overall diameter of the joint is critical, the lower surface 47 (Figure 5) of the bottom part 40 may be formed to follow the same pitch along the length of the cable. What is more important, however, is that the surfaces which come in contact with the cable conductor surface are smooth and free of any sharp edges or the like that could damage the cable surface.

For a stranded cable bundle having a diameter of some 100 mm, the dimensions of the fiber optic jointing means could be as follows: The length of the cradle and cabinet could be 260 mm, whereas the diameter could be 160 mm. The fiber optic jointing compartment 44 could have a width of some 70 mm and a height of some 20 mm which is sufficient for providing jointing space for a 15 mm fiber optic cable having some 24 optical fibers. The overall stiff length of the jointing means, i e between the outer ends of the housing parts 25 and 26 need be less than 900 mm.

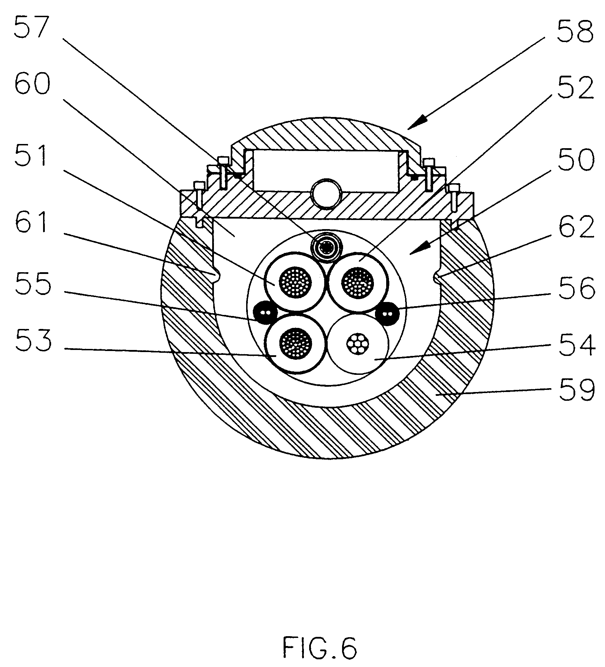

In Figure 6 is illustrated a crossection of a joint of an alternative longitudinal bundle of longitudinal elements. When a fiber optic cable 57 is taken out of the bundle for jointing, the remaining bundle 50 in this example includes three insulated power conductors 51, 52 and 53, a multiconductor signal cable 54, two elements 55 and 56 which can be signalling pairs, other fiber optic cables or other longitudinal elements. The fiber optic cable 57 indicated will be brought out of the original bundle of elements to be jointed in a cabinet 58. The cabinet is attached to a cradle-like structure 59 which together with the cabinet encompasses the remaining bundle 50. In this example, where the overall diameter of the joint may not be so critical, the bottom part of the cabinet 58 does not have to be formed to fit the curvature of the remaining bundle 50. When the voids within the cabinet/cradle structure is filled with a compound 60 such as a silicone rubber, the remaining bundle 50 will be prevented from rotating relatively to the structure. As mentioned in connection with Figure 3, means should be provided on both sides of the joint to prevent the filling compound from flowing or penetrating into the bundle voids on either sides of the joint area.

The position of the fiber optic cable entrance to the cabinet relatively to the remaining bundle should be maintained within narrow limits. Ridges 61 and 62 could also be provided on the inner wall of the cradle to prevent rotation of the filler material. Socket set screws (not shown) could also be introduced through the wall of the cradle into the compound to prevent mutual rotation.

If the bundle contains more than one fiber optic cable, the cabinet could be arranged for jointing more than one cable, - then having more than one set of entrances. Alternatively such additional cables can be jointed in additional cabinets angularly displaced from the cabinet 58 in the cradle 59, and/or longitudinally displaced from the joint area 2.

The present invention is also suitable for jointing of composite cables consisting of a single conductor power cable with one or more optical cables arranged in the outer layers of the power cable, such as EP 92 117 360 (Balog 11-1) and EP 92 118 327 (Berthelsen 2-10-2).

Bending strain restrictors (not shown) may be used on either side of the jointing means in order avoid undue bending of the longitudinal element.

The above detailed description of embodiments of this invention must be taken as examples only and should not be considered as limitations on the scope of protection. For example, means, such as socket set screws, can be provided for preventing the mutual rotation of the housing parts 23-26 after tensioning of the armour 31. In the case of single armoured cables, means should be provided for locking one of the armour flange part 25 or 26 to its adjacent threaded part 23 or 24 before tensioning the armour 31.

## Claims

1. Means for jointing a bundle of longitudinal elements, **characterized in that**
it includes a cabinet (21,58) which is adapted for jointing at least one of the elements (14) and which is fitted to a cradle-like structure (20,59) encompassing a bundle (27,50) of the remaining longitudinal elements.

2. Means according to claim 1,
**characterized in that**
it includes means (28,60) for preventing or limiting rotation of said remaining bundle (27,50) relatively to the cabinet/cradle structure (21,20;58,59).

3. Means according to claim 2,
**characterized in that**
the rotation preventing/limiting means (28,60) is constituted by a compound substantially filling all voids within the cabinet/cradle structure (21,20;58,59).

4. Means according to claim 1, 2 or 3 for jointing a composite electrical/optical cable having three or more insulated power conductors (10,11,12;51-56) and one or more fiber optic cables (14,57), **characterized in that** it includes at least one fiber optic jointing cabinet (21,58) fitted to a cradle-like structure (20,59) encompassing the power conductor bundle (27,50).

5. Means according to claim 1,
**characterized in that**
the cabinet (21) has a bottom part (40) fitted to the curvature of said remaining bundle (27).

6. Means according to claims 1,
**characterized in that**
the outer surface of the cabinet/cradle structure (21,58;20,59) with a lid (43) is substantially circular.

7. Means according to claim 1,
**characterized in that**
the cabinet (21,58) is made of sea water resistant material such as stainless steel and that the cradle (20,59) is made of a polyamide such as nylon.

8. Means according to claim 1,
**characterized in that**
it comprises an outer housing (23,24) encompassing the cabinet/cradle (21,20;58,59) structure.

9. Means according to claim 8,
**characterized in that**
the outer housing comprises a first (25) and a second part (26) having arrangements for terminating cable armouring (31), as well as a third (23) and a fourth (24) part which are rotatable relatively to each other and to the first and second parts.

10. Means according to claim 9,
**characterized in that**
the rotatable third and fourth parts (23,24) are interconnected with a threaded area (32) so as to enable controlled tensioning of the armour (31).

11. Means according to claim 9,
**characterized in that**
the third and/or fourth parts (23,24) are provided with through-holes (33,34) enabling use of tools for rotating said parts on their threads, and for enabling filling of voids within the housing (23-26) and cradle structure (20,59) with a filling compound.

12. Means according to claim 10,
**characterized in that**
that means, such as socket set screws, are provided for preventing the mutual rotation of the housing parts (23-26) after tensioning of the armour (31).

13. Means according to claim 10,
**characterized in that**
that in the case of single armoured cables, means are provided for locking an armour flange part (25 or 26) to its adjacent threaded part (23 or 24) before tensioning the armour (31).
